# EUROPEAN PATENT APPLICATION

(11) **EP 2 227 041 A1**
(43) Date of publication of application: **08.09.2010**
(21) Application number: 10155615.7
(22) Date of filing: 05.03.2010
(51) Int. Cl.: H04R 25/00

(54) **A method for fabricating a hearing device**

(30) Priority: 06.03.2009 US 158055 P; 04.03.2010 US 717362
(71) Applicant: Siemens Hearing Instruments, Inc., Piscataway, NJ 08854 (US)
(72) Inventor: De Finis, James Edward, Flanders, NJ 07836 (US); Vaze, Amit, Parlin, NJ 08859 (US)
(74) Representative: Clarke, Alison Clare

(57) **Abstract**

A method (10) for fabricating a hearing aid using a self contained hearing aid production laboratory employing three dimensional printing technology. The method (10) comprises the steps of conducting audiometric testing of an individual with a hearing impairment (12, 14); selecting and customizing a product design for the hearing aid to be produced (16, 18); producing the selected and customized hearing aid (20, 22, 24); and performing final adjustments to the produced hearing aid (26, 28).

## Description

### CROSS-REFERENCE TO RELATED APPLICATIONS

This application claims the benefit of Provisional U.S. Patent Application Serial No. 61/158,055, entitled, "A Method For A Portable Hearing Device Manufacturing And Diagnostics Laboratory", filed in the name of James Edward De Finis and Amit Vaze on March 6, 2009, the disclosure of which is also hereby incorporated herein by reference.

### FIELD OF INVENTION

The present invention relates to hearing aids. More particularly, the present invention relates to the fabrication of hearing aids.

### BACKGROUND OF THE INVENTION

The conventional procedure to fabricate a hearing aid starts with an individual visiting a hearing aid retail location (known as a hearing aid dispenser) for an examination by a health care professional who deals with impaired hearing, known as an audiologist. The audiologist conducts appropriate hearing tests to obtain an audiogram which displays the test results and determines the hearing impairment of the individual. The audiologist then determines the required performance characteristics for a hearing aid that would mitigate the hearing impairment and recommends a suitable hearing aid. The individual's preferences as to the physical characteristics, for example, shape, sizing, and configuration, also weigh on the decision for an appropriate hearing aid to fabricate. Sample devices are typically made available for an individual's personal inspection.

The physical characteristics of hearing aid must be customized to the individual's ear which shows the impaired hearing. To accomplish this, the audiologist makes a mold of the individual's ear, including the auditory canal, using appropriate materials, for example, quick hardening foam, and well-known techniques. The mold provides an impression of the individual's ear. The audiologist then forwards the physical mold, the hearing aid performance requirements, and the device recommendations to a hearing aid manufacturer for producing a customized hearing aid. The manufacturer replicates the impression captured by the mold into for example, a hearing shell that will fit into the patient's ear (known as an otoplastic) and then installs the appropriate electronic components into the shell which compensate for the previously-identified hearing impairment. Final assembly of the device and appropriate testing complete the manufacturing process.

The manufacturer returns the manufactured device to the audiologist who then subsequently meets with the individual for a fitting of the hearing aid. As might be expected, there are instances wherein the manufactured hearing aid is not satisfactory, generally because of an uncomfortable fit with the individual's ear or an unsatisfactory correction of the previously-identified hearing impairment. These may be due to various reasons, for example, the mold did not capture a true or true enough impression of the individual's ear, the mold became deformed during transit or otherwise, the manufacturing process used faulty electronic components, the manufacturing process introduced imperfections to the hearing aid, etc. Regardless, sometimes the audiologist may be able to affect satisfactory changes at the retail location but sometimes only the manufacturer at the fabrication location can make any required changes. Further, in some instances, modifications are not possible or feasible at all and portions of the fabrication procedure, or the entire procedure, must be repeated. Subsequent iterations of the entire or portions of the fabrication procedure are common.

As can be seen from the above, the conventional procedure to fabricate a hearing aid is, at the very least, time consuming because of the likely iterations required to complete the procedure. In addition, the procedure introduces additional costs associated with the back and forth communication of physical items and information between the audiologist and the hearing aid manufacturer as well as the repeated visits and meetings between the individual and the audiologist. Unfortunately, neither the extra time nor cost serves to make the procedure more comfortable for the individual or to ensure a high quality device is produced. Many computerized design methods and improvements in manufacturing have been employed in recent years to streamline portions of the fabrication procedure, but the basic procedure has not changed.

The opportunity to change the fundamentals of the procedure, however, may now be possible with the current advances in certain manufacturing technologies, especially three dimensional (3D) printing technologies. Rapid prototyping technologies, including 3D modeling/printing, have been in existence since the 1980's; stereolithography (SL) was originally developed to produce components for engineering prototypes and models. At the nanometer scale, IBM further developed electron microscope technology to physically manipulate molecules to build nanoscopic structures. In 2003, rapid prototyping/3D printing technology was deemed sufficiently mature to be employed in the large scale manufacturing of custom hearing instruments. The technology today is used to create the custom shell of the hearing aid from a 3D scan of the individual's ear impression. In 2005, the RepRap Project laid out the first steps to bring 3D printing capabilities to unsophisticated, ordinary people. RepRap is an Open Source pilot project to develop a 3D printing device with expanded capabilities, including the capability to produce all of the components needed to replicate itself. The software and the basic plans for a RepRap device are free of charge over the internet for those who wish to explore the device's use and contribute to its growing development community.

The benefits of early 3D printing technologies to manufacturers across various fields have included flexible design and prototyping and lower manufacturing costs. But as these technologies continue to advance and expand their capabilities, for example, to provide built-in engineering expertise to design, they will permit batch, centralized manufacturing to fully change over into individualized, on-site manufacturing, even for ordinary people. This will alter the hearing aid fabrication procedure involving the audiologist and the hearing aid manufacturer.

### SUMMARY OF THE INVENTION

The above problems are obviated by embodiments of the present invention which allow conducting audiometric testing of an individual to determine the hearing impairment of the individual; selecting and customizing the product design of the hearing aid to be fabricated that would mitigate the hearing impairment; producing the selected and customized hearing aid; and performing final programming adjustments to the produced hearing aid, said steps being performed by use of a hearing aid production apparatus employing three dimensional printing, computer, and telecommunications technologies.

Conducting audiometric testing may comprise acquiring and recording an impression of the individual's ear showing the hearing impairment. In turn, acquiring and recording an impression may comprise directly scanning the individual's ear to determine the size and shape of its perimeter and surfaces at various intervals. Selecting and customizing may comprise obtaining product information from a hearing aid manufacturer that enables the production of the selected and customized product design of the hearing aid to be fabricated. Alternatively, selecting and customizing may comprise reviewing and selecting a product, product options and product performance capabilities offered by a hearing aid manufacturer. In such case, selecting and customizing may further comprise obtaining product information from the hearing aid manufacturer that enables the production of the reviewed and selected product, product options and product performance capabilities for the hearing aid to be fabricated.

Conducting audiometric testing may instead comprise determining the performance characteristics for a hearing aid to be fabricated that would mitigate the hearing impairment and designing a physical fit in consideration of the hearing aid performance and wearability. In such case, selecting and customizing may comprise fulfilling the determined performance characteristics and the designed physical fit.

Producing may comprise producing a physical shell and all the components, operably connected, necessary for the proper operation of the hearing aid to be fabricated in accordance with the selected and customized product design. Producing may further comprise testing the hearing aid and repeating the producing step until the hearing aid is produced in accordance with the selected and customized product design, or the producing step is aborted, or the testing is overridden.

Alternatively, an embodiment of the present invention provides a method for fabricating a hearing aid that determines the hearing impairment of an individual; determines the performance characteristics for the hearing aid to be fabricated that would mitigate the hearing impairment and designs a physical fit in consideration of the hearing aid performance and wearability; selects a product design of the hearing aid to be fabricated that fulfills the determined performance characteristics and the designed physical fit; and produces, via three dimensional printing, the selected hearing aid to be fabricated. The method may also test the produced hearing aid and repeat the producing and testing steps until the hearing aid is produced in accordance with the selected product design, or the producing step is aborted, or the testing step is overridden. The producing step may comprise producing a physical shell and all the components, operably connected, necessary for the proper operation of the hearing aid to be fabricated in accordance with the selected product design.

The alternative method steps may be carried out by a hearing aid production apparatus employing three dimensional printing technologies. Further, the method steps may be carried out at a single location with the selecting step comprising electronically obtaining product information from a remote hearing aid manufacturer that enables the one-site production of the selected product design of the hearing aid to be fabricated.

An embodiment of the present invention significantly reduces the amount of time it takes to fabricate a hearing aid. The conventional fabrication procedure is based on the hearing aid manufacturer operating at a centralized location using a large quantity/large batch system, which could take up to a week or more for a hearing aid to be produced. In contrast, the present invention employs the advances in manufacturing and, in particular, 3D printing technologies, to perform the fabrication operations on-site at the hearing aid dispenser on an individualized basis, which could take at most hours to complete.

An embodiment of the present invention provides additional benefits to the individual, the audiologist, and the hearing aid manufacturer. Foremost is the cost savings associated with the reduction of the movement of items and information between the audiologist and the manufacturer, resulting in, for example, the elimination of the shipping of physical items, smaller staff and inventory of parts at the manufacturer, etc. Also, the audiologist gains the capability to conduct on-site diagnostics and quality control of the produced hearing aid and avoids the multiple waiting periods of completing the transaction. Finally, the individual obtains a complete "walk-in" solution for a custom product at a reduced cost. An embodiment of the present invention also opens business opportunities pertaining to the production laboratory, such as sales or rentals of the laboratory equipment, laboratory servicing and maintenance, and sales or licensing of product design data and information stored in the laboratory.

### DESCRIPTION OF THE DRAWINGS

For a better understanding of embodiments of the present invention, reference is made to the following description of an exemplary embodiment thereof, and to the accompanying drawings, wherein:

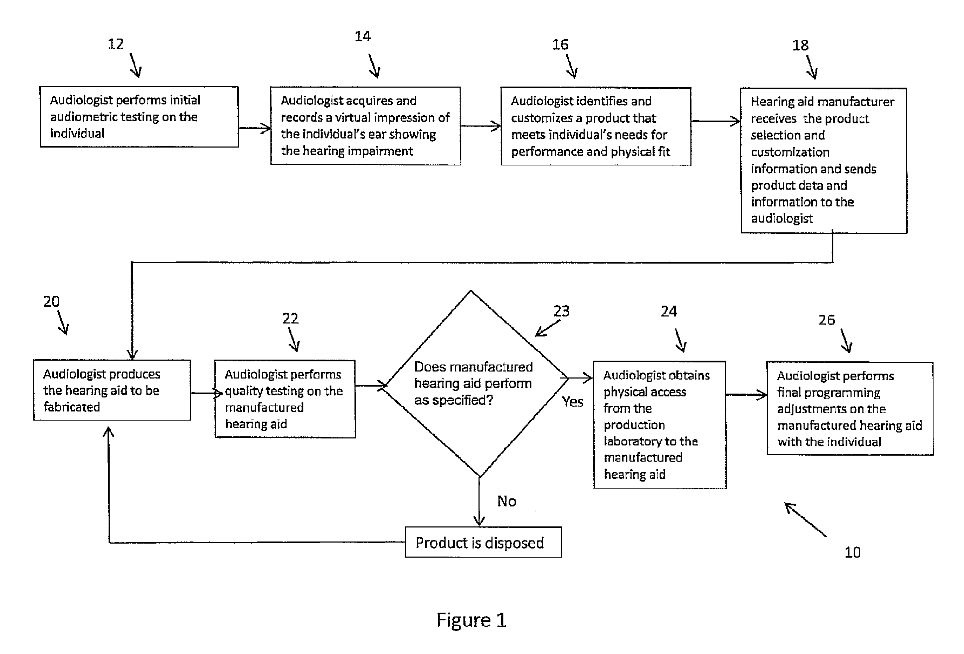

Figure 1 schematically illustrates the basic steps in a method for fabricating a hearing aid device according to an embodiment of the present invention.

### DETAILED DESCRIPTION

Figure 1 is a schematic representation of the basic steps of a fabrication method 10 according to an embodiment of the present invention. In performing the method 10, the audiologist may use a self-contained hearing aid production laboratory which, among other features, utilizes a multi-material 3D printing technology within a miniature controlled environment to produce an actual hearing aid. The production laboratory also has computer capabilities to run general purpose and application-specific software that implements algorithms for design, production, and/or testing and to store information used in or related to the fabrication procedure. Interfaces for the laboratory include standard input/output devices, for example, alphanumeric keypad, video display, etc., and application-specific devices, for example, electronic probe, scanner, etc. Any of these interfaces may be integrated with or operably connected to the production laboratory. The production laboratory also has telecommunications capabilities to electronically communicate with remote sites or other systems. Other capabilities are evident from the detailed description of the method 10.

In the first step 12 of the method 10, an audiologist uses the production laboratory to perform initial audiometric testing that determines deficiencies in the individual's hearing, i.e., an individual's hearing impairment. The testing may also be done by the audiologist's assistant, a clinician under the audiologist's direction, or another appropriate health care professional. The method 10 employs various standard and documented methodologies to allow the audiologist to particularly identify, or "zero-in" on, specific ranges of the individual's perception of their acoustical environment. The production laboratory has the capability to perform all of the methodologies. In the second step 14 of the method 10, which may be considered a part of the audiometric testing, the audiologist uses the production laboratory to acquire and record an impression of the individual's ear, including the auditory canal. The laboratory has the capability to take an electronic scan of the ear and obtain an electronic ear impression. The audiologist may make the electronic ear impression by directly scanning, via an appropriate probe, the individual's ear to determine the size and shape of its perimeter and surfaces at various intervals. Alternatively, the audiologist may make a traditional mold of the individual's ear and then scan the resulting impression. Regardless, the audiologist records and stores the ear impression (e.g., a 3D data set of the ear impression) in the production laboratory.

The audiologist now has access to the stored impression to design a desired or optimal physical fit of the hearing aid in the individual's ear. Specifically, the audiologist can use the laboratory to input the desired or required performance characteristics for a hearing aid that would mitigate the hearing impairment and to recommend a suitable hearing aid device. The audiologist would also input the individual's preferences as to the physical characteristics. The audiologist can then use the production laboratory to perform virtual modifications to the hearing aid's shape in consideration of comfort, performance information, and the individual's preferences. The audiologist will also use the production laboratory to conduct virtual testing on the modified design to verify the expected product's performance and wearability. All or part of these activities may be accomplished with appropriate software that implements algorithms for the modeling and detailing of the hearing aid, including the placement of components and shell features.

In the third step 16 of the method 10, once the audiologist has finalized the requirements for the end product, the audiologist identifies and customizes a product that would fulfill those requirements. The audiologist uses the laboratory to review and select several products, options, and performance capabilities offered by one or more hearing aid manufacturers. This information is stored in the laboratory or can be accessed by the laboratory in various ways, such as internet downloading from a manufacturer's site. Once the audiologist completes a product selection and customization, the audiologist then uses the laboratory to transmit to the manufacturer the product request and, as shown in the fourth step 18, to receive from the manufacturer various product data and associated information, for example, engineering design specifications, quality control specifications, and a license to produce a single product. The production laboratory may be used by the manufacturer, and the audiologist, to handle and complete the financial transaction itself, like the actual charging and payment of costs and fees. In any case, financial information may be part of the exchanged product data and information.

In the fifth step 20, the audiologist uses the production laboratory to produce the actual hearing aid utilizing multi-material 3D printing technology. Typically, systems like the production laboratory incorporating 3D printing technology maintain a stock of raw material that they require for the production process. The audiologist produces in accordance with the audiologist's previously-devised specification the end product hearing aid that includes a physical casing or shell and all components (including electronic circuits), operably connected, necessary for the proper operation of the hearing aid. The components are typically located within the interior space and the walls of the casing/shell. In the next step 22, the audiologist performs, or the production laboratory automatically performs, quality testing on the end product's acoustical performance and structural strength prior to hearing aid being physically released by the production laboratory. In the next step 23 of the method 10, the audiologist compares, or the production laboratory automatically compares, the produced end product against the performance specification. If the end product does not meet specified performance parameters, the audiologist permits the production laboratory to automatically dispose, destroy, or recycle the product. The audiologist then repeats the steps of producing, testing, and comparing (steps 20, 22, 23) until the product meets the performance specifications or the audiologist decides to abort the production or override the testing or comparison steps.

Upon production of a satisfactory actual hearing aid, the audiologist obtains physical access to the hearing aid for inspection and final review (the penultimate step 24 of the method 10). In the final step 26, the audiologist uses the production laboratory to conduct final programming adjustments to meet the hearing aid's expected performance with the individual. As part of the step, the audiologist performs a final acoustical test using standard industry methods. Finally, the audiologist inserts the hearing aid into the individual's ear to complete the final program adjustments with the individual using the actual hearing aid.

Other modifications are possible within the scope of embodiments of the present invention. For example, although the steps of the method 10 have been described in a specific sequence, the order of the steps may be reordered in part or in whole. Further, although in the described method 10 the audiologist may use a self-contained hearing aid production laboratory which utilizes a multi-material 3D printing technology within a miniature controlled environment to produce an actual hearing aid, the audiologist may use other tools in combination with the production laboratory or in place of the laboratory for any step or all the steps of the method 10.

## Claims

1. A method for fabricating a hearing aid, comprising the steps of:
a. conducting audiometric testing of an individual to determine the hearing impairment of the individual;
b. selecting and customizing the product design of the hearing aid to be fabricated that would mitigate the hearing impairment;
c. producing the selected and customized hearing aid; and
d. performing final programming adjustments to the produced hearing aid, said steps being performed by use of a hearing aid production apparatus employing three dimensional printing, computer, and telecommunications technologies.

2. The method of claim 1, wherein the conducting step comprises acquiring and recording an impression of the individual's ear showing the hearing impairment.

3. The method of claim 2, wherein the acquiring and recording step comprises directly scanning the individual's ear to determine the size and shape of its perimeter and surfaces at various intervals.

4. The method of claim 1, wherein the conducting step comprises determining the performance characteristics for a hearing aid to be fabricated that would mitigate the hearing impairment and designing a physical fit in consideration of the hearing aid performance and wearability.

5. The method of claim 1, wherein the selecting and customizing step comprises obtaining product information from a hearing aid manufacturer that enables the production of the selected and customized product design of the hearing aid to be fabricated.

6. The method of claim 1, wherein the selecting and customizing step comprises reviewing and selecting a product, product options and product performance capabilities offered by a hearing aid manufacturer.

7. The method of claim 6, wherein the selecting and customizing step further comprises obtaining product information from the hearing aid manufacturer that enables the production of the reviewed and selected product, product options and product performance capabilities for the hearing aid to be fabricated.

8. The method of claim 4, wherein the selecting and customizing step comprises fulfilling the determined performance characteristics and the designed physical fit.

9. The method of claim 1, wherein the producing step comprises producing a physical shell and all the components, operably connected, necessary for the proper operation of the hearing aid to be fabricated in accordance with the selected and customized product design.

10. The method of claim 9, wherein the producing step further comprises testing the hearing aid and repeating the producing step until the hearing aid is produced in accordance with the selected and customized product design, or the producing step is aborted, or the testing is overridden.

11. A method for fabricating a hearing aid, comprising the steps of:
a. determining the hearing impairment of an individual;
b. determining the performance characteristics for the hearing aid to be fabricated that would mitigate the hearing impairment and designing a physical fit in consideration of the hearing aid performance and wearability;
c. selecting a product design of the hearing aid to be fabricated that fulfills the determined performance characteristics and the designed physical fit; and
d. producing, via three dimensional printing, the selected hearing aid to be fabricated.

12. The method of claim 11, wherein the producing step comprises producing a physical shell and all the components, operably connected, necessary for the proper operation of the hearing aid to be fabricated in accordance with the selected product design.

13. The method of claim 11, further comprising testing the produced hearing aid and repeating the producing and testing steps until the hearing aid is produced in accordance with the selected product design, or the producing step is aborted, or the testing step is overridden.

14. The method of claim 11, wherein all the steps are carried out by a hearing aid production apparatus employing three dimensional printing, computer, and telecommunications technologies.

15. The method of claim 11, wherein all the steps are carried out at a single location and the selecting step comprises electronically obtaining product information from a remote hearing aid manufacturer that enables the one-site production of the selected product design of the hearing aid to be fabricated.
